# EUROPEAN PATENT APPLICATION

(11) **EP 4 520 500 A1**
(43) Date of publication of application: **12.03.2025**
(21) Application number: 23819419.5
(22) Date of filing: 16.01.2023
(51) Int. Cl.: B29B 9/06, B29C 48/25, B29C 48/30, C08J 3/12

(54) **RESIN CUTTER, PELLETIZER, AND METOD FOR CONTROLLING RESIN CUTTER**

(30) Priority: 07.06.2022 JP 2022092273
(71) Applicant: The Japan Steel Works, Ltd., Tokyo 141-0032 (JP)
(72) Inventor: FUKUI, Ryota, Tokyo 141-0032 (JP); ISHIKAWA, Makoto, Tokyo 141-0032 (JP); TANAKA, Mamoru, Tokyo 141-0032 (JP); HARAWAKI, Mutsushi, Tokyo 141-0032 (JP)
(74) Representative: Simmons & Simmons LLP (Munich)
(86) International application number: PCT/JP2023/001040
(87) International publication number: WO 2023/238431

(57) **Abstract**

The present invention automates either the adjustment of rotating-shaft retreating force, which is a constituent element of cutting-blade-pushing force in a resin cutter, or grinding. On the basis of a technical idea for controlling the cutting-blade-pushing force whereby a plurality of cutting blades for cutting a resin into pellets are pushed against a die disposed on the resin ejection side of an extruder, the present invention comprises determining a wear amount of the plurality of cutting blades and then automatically controlling the magnitude of the rotating-shaft retreating force to be applied to the rotating shaft on the basis of the determined wear amount of the plurality of cutting blades.

## Description

### TECHNICAL FIELD

The present invention relates to a resin cutting apparatus, a pelletizer, and a technique for controlling a resin cutting apparatus, and relates to, for example, a technique effectively applied to a technique for cutting a resin by a plurality of cutter blades while controlling a cutter blade pressing force for pressing the plurality of cutter blades to a die to be constant.

### BACKGROUND ART

Japanese Patent No. 3751014 (Patent Document 1) discloses a technique for controlling a cutter blade pressing force to be constant.

### RELATED ART DOCUMENTS

### PATENT DOCUMENTS

Patent Document 1: Japanese Patent No. 3751014

### SUMMARY OF THE INVENTION

### PROBLEMS TO BE SOLVED BY THE INVENTION

A resin cutting apparatus is, for example, an apparatus that manufactures pellets by cutting a resin by rotating a plurality of cutter blades in water while always pressing the plurality of cutter blades at a predetermined pressure to a surface of a die from which a strand-shaped molten resin is discharged.

Here, when the cutter blade pressing force for pressing the plurality of cutter blades to the die is inappropriate, an phenomenon in which the plurality of cutter blades are excessively worn or the resin cutting failure (defective cutting) may occur. In this case, there is a fear that the lifetime of each of the plurality of cutter blades is shortened or the quality of the pellets as a product is degraded.

In this regard, when the cutter blade pressing force is inappropriate, a rotating shaft backward force, which is one of the constituent forces of the cutter blade pressing force, is adjusted, but this adjustment is performed manually. For this reason, the adjustment of the cutter blade pressing force depends on the experience and skill of a worker. Therefore, it is desired to automate the adjustment of the cutter blade pressing force.

### MEANS FOR SOLVING THE PROBLEMS

A method of controlling a resin cutting apparatus according to an embodiment is a method of controlling a resin cutting apparatus configured to manufacture pellets by cutting a resin discharged from an extruder by a plurality of cutter blades. Here, the method of controlling the resin cutting apparatus includes a step of controlling a cutter blade pressing force for pressing the plurality of cutter blades to a die provided on a resin discharge side of the extruder. Also, the step of controlling the cutter blade pressing force includes: a wear amount detecting step of detecting a wear amount of the plurality of cutter blades during an operation of the resin cutting apparatus to cut the resin into the pellets; and a rotating shaft backward force controlling step of controlling a magnitude of a rotating shaft backward force applied to a rotating shaft attached to a cutter head in which the plurality of cutter blades are arranged, based on the wear amount of the plurality of cutter blades detected in the wear amount detecting step.

A method of controlling a resin cutting apparatus according to an embodiment is a method of controlling a resin cutting apparatus configured to manufacture pellets by cutting a resin discharged from an extruder by a plurality of cutter blades. Here, the method of controlling the resin cutting apparatus includes a step of performing a grinding process on each of the plurality of cutter blades before performing an operation to cut the resin into the pellets. At this time, the step of performing the grinding process includes: (a) a step of bringing the plurality of cutter blades into contact with a die provided on a resin discharge side of the extruder based on an output from a forward/backward movement control position sensor used to control forward and backward movement of a rotating shaft attached to a cutter head in which the plurality of cutter blades are arranged and an output from a wear amount detection position sensor; (b) after the step (a), a step of acquiring a first position of the cutter head based on the output from the wear amount detection position sensor; (c) after the step (b), a step of performing the grinding process for a predetermined period of time; (d) after the step (c), a step of acquiring a second position of the cutter head based on the output from the wear amount detection position sensor; (e) after the step (d), a step of calculating a difference between the first position and the second position; and (f) after the step (e), a step of comparing the difference and a predetermined setting value to judge whether or not to end the grinding process.

A resin cutting apparatus according to an embodiment includes: a die provided on a resin discharge side of an extruder; a plurality of nozzles provided in the die; a plurality of cutter blades configured to cut a resin discharged from the plurality of nozzles into pellets; a cutter head in which the plurality of cutter blades are arranged; a rotating shaft attached to the cutter head; a motor configured to rotate the rotating shaft; a flow path chamber constituting a flow path space that is in contact with the cutter head; an inlet through which a fluid flows into the flow path chamber; an outlet through which the fluid and the pellets flow out of the flow path chamber; a control unit configured to control a cutter blade pressing force for pressing the plurality of cutter blades to the die; a rotating shaft forward force generating unit configured to generate a rotating shaft forward force on the rotating shaft; a rotating shaft backward force generating unit configured to generate a rotating shaft backward force on the rotating shaft; a forward/backward movement control position sensor configured to control forward and backward movement of the rotating shaft; and a wear amount detection position sensor configured to detect a wear amount of the plurality of cutter blades. Here, the control unit controls a magnitude of the rotating shaft backward force applied to the rotating shaft based on an output from the wear amount detection position sensor.

A resin cutting apparatus according to an embodiment includes: a die provided on a resin discharge side of an extruder; a plurality of nozzles provided in the die; a plurality of cutter blades configured to cut a resin discharged from the plurality of nozzles into pellets; a cutter head in which the plurality of cutter blades are arranged; a rotating shaft attached to the cutter head; a motor configured to rotate the rotating shaft; a flow path chamber constituting a flow path space that is in contact with the cutter head; an inlet through which a fluid flows into the flow path chamber; an outlet through which the fluid and the pellets flow out of the flow path chamber; a control unit configured to control a cutter blade pressing force for pressing the plurality of cutter blades to the die; a rotating shaft forward force generating unit configured to generate a rotating shaft forward force on the rotating shaft; a rotating shaft backward force generating unit configured to generate a rotating shaft backward force on the rotating shaft; a forward/backward movement control position sensor configured to control forward and backward movement of the rotating shaft; and a wear amount detection position sensor configured to detect a wear amount of the plurality of cutter blades. Here, the control unit includes a grinding control unit configured to control a grinding process performed on each of the plurality of cutter blades before performing an operation of cutting the resin into the pellets. This grinding control unit includes: a first position acquisition unit configured to acquire a first position of the cutter head based on an output from the wear amount detection position sensor; a second position acquisition unit configured to acquire a second position of the cutter head after performing the grinding process for a predetermined period of time, based on the output from the wear amount detection position sensor; a difference calculation unit configured to calculate a difference between the first position and the second position; a comparison unit configured to compare the difference and a predetermined setting value; and a judgment unit configured to judge whether to end the grinding process based on a comparison result between the difference and the setting value.

A pelletizer according to an embodiment includes: an extruder; and a resin cutting apparatus configured to cut a resin extruded from the extruder into pellets. Here, the resin cutting apparatus includes: a die provided on a resin discharge side of the extruder; a plurality of nozzles provided in the die; a plurality of cutter blades configured to cut the resin discharged from the plurality of nozzles into the pellets; a cutter head in which the plurality of cutter blades are arranged; a rotating shaft attached to the cutter head; a motor configured to rotate the rotating shaft; a flow path chamber constituting a flow path space that is in contact with the cutter head; an inlet through which a fluid flows into the flow path chamber; an outlet through which the fluid and the pellets flow out of the flow path chamber; a control unit configured to control a cutter blade pressing force for pressing the plurality of cutter blades to the die; a rotating shaft forward force generating unit configured to generate a rotating shaft forward force on the rotating shaft; a rotating shaft backward force generating unit configured to generate a rotating shaft backward force on the rotating shaft; a forward/backward movement control position sensor configured to control forward and backward movement of the rotating shaft; and a wear amount detection position sensor configured to detect a wear amount of the plurality of cutter blades. Also, the control unit controls a magnitude of the rotating shaft backward force applied to the rotating shaft based on an output from the wear amount detection position sensor.

A pelletizer according to an embodiment includes: an extruder; and a resin cutting apparatus configured to cut a resin extruded from the extruder into pellets. Here, the resin cutting apparatus includes: a die provided on a resin discharge side of the extruder; a plurality of nozzles provided in the die; a plurality of cutter blades configured to cut the resin discharged from the plurality of nozzles into the pellets; a cutter head in which the plurality of cutter blades are arranged; a rotating shaft attached to the cutter head; a motor configured to rotate the rotating shaft; a flow path chamber constituting a flow path space that is in contact with the cutter head; an inlet through which a fluid flows into the flow path chamber; an outlet through which the fluid and the pellets flow out of the flow path chamber; a control unit configured to control a cutter blade pressing force for pressing the plurality of cutter blades to the die; a rotating shaft forward force generating unit configured to generate a rotating shaft forward force on the rotating shaft; a rotating shaft backward force generating unit configured to generate a rotating shaft backward force on the rotating shaft; a forward/backward movement control position sensor configured to control forward and backward movement of the rotating shaft; and a wear amount detection position sensor configured to detect a wear amount of the plurality of cutter blades. Also, the control unit includes a grinding control unit configured to control a grinding process performed on each of the plurality of cutter blades before performing an operation of cutting the resin into the pellets. The grinding control unit includes: a first position acquisition unit configured to acquire a first position of the cutter head based on an output from the wear amount detection position sensor; a second position acquisition unit configured to acquire a second position of the cutter head after performing the grinding process for a predetermined period of time, based on the output from the wear amount detection position sensor; a difference calculation unit configured to calculate a difference between the first position and the second position; a comparison unit configured to compare the difference and a predetermined setting value; and a judgment unit configured to judge whether to end the grinding process based on a comparison result between the difference and the setting value.

### EFFECTS OF THE INVENTION

According to one embodiment, it is possible to automate the adjustment of the rotating shaft backward force which is a constituent element of the cutter blade pressing force and the grinding process in the resin cutting apparatus.

### BRIEF DESCRIPTIONS OF THE DRAWINGS

[FIG. 1] is a diagram illustrating a schematic configuration of a pelletization system.
[FIG. 2] is a diagram illustrating a schematic configuration of a resin cutting apparatus.
[FIG. 3] is a plan view illustrating a schematic configuration example of a die.
[FIG. 4] is a plan view illustrating a schematic configuration example of a cutter head.
[FIG. 5] is a diagram illustrating a schematic configuration of a main part of the resin cutting apparatus.
[FIG. 6] is a graph for describing an operation example of a control unit.
[FIG. 7] is a diagram illustrating a schematic configuration of a resin cutting apparatus in an embodiment.
[FIG. 8] is a diagram for describing a division between an operation range of a wear amount detection position sensor and an operation range of a forward/backward movement control position sensor.
[FIG. 9] is a functional block diagram of a rotating shaft backward force control unit.
[FIG. 10] is a flowchart illustrating a flow of a first control operation example.
[FIG. 11] is a flowchart illustrating a flow of a second control operation example.
[FIG. 12] is a functional block diagram of a control unit.
[FIG. 13] is a functional block diagram of a grinding control unit.
[FIG. 14] is a flowchart illustrating a flow of a control operation of a grinding process.

### DETAILED DESCRIPTION OF PREFERRED EMBODIMENTS

In all the drawings for describing the embodiment, the same members are denoted by the same reference characters in principle and repetitive descriptions thereof are omitted. Note that hatching is applied even in a plan view in some cases so as to make the drawing easier to understand.

### <Pelletization System>

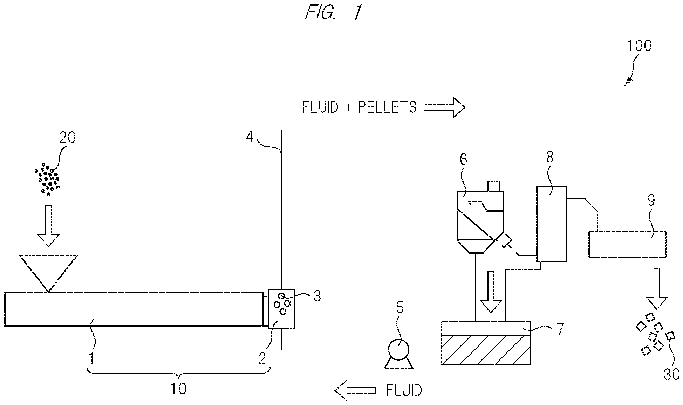

FIG. 1 is a diagram illustrating a schematic configuration of a pelletization system.

A pelletization system 100 includes a pelletizer 10 including an extruder 1 and a resin cutting apparatus 2, a pipe 4, a pump 5, a dehydrator 6, a tank 7, a centrifugal dehydration dryer 8, and a vibrating sieve 9.

The extruder 1 is configured to knead a resin raw material 20 by a rotating screw and extrude the kneaded resin from a plurality of nozzles provided in a die of the resin cutting apparatus 2.

The resin cutting apparatus 2 is configured to manufacture pellets by cutting the molten resin extruded from the plurality of nozzles provided in the die by a plurality of cutter blades.

The pipe 4 functions as a flow path through which hot water (fluid) flows. In addition, the pump 5 has a function of circulating the hot water flowing through the pipe 4. Also, the tank 7 is a storage tank for storing hot water.

The dehydrator 6 has a function of separating the pellets from the hot water, and the centrifugal dehydration dryer 8 further has a function of drying the pellets. The vibrating sieve 9 is configured to sort out the pellets by size.

The pelletization system 100 configured in this manner operates as follows. That is, first, the resin raw material 20 is supplied to the extruder 1. Then, the resin raw material 20 supplied to the extruder 1 is kneaded by the screw, and the molten resin is extruded from the plurality of nozzles provided in the die. The extruded resin is cut by the plurality of cutter blades provided in the resin cutting apparatus 2. This cutting of the resin is performed inside a flow path chamber through which hot water flows. In this way, the molten resin is cut into pellets 30 of a predetermined size, and then cooled and solidified with hot water. In this manner, solidified pellets 30 are manufactured by the pelletizer 10 including the extruder 1 and the resin cutting apparatus 2.

At this time, hot water is circulated between the tank 7 and the flow path chamber by the pipe 4 and the pump 5. As a result, slurry 3 which is a mixture of the pellets 30 and the hot water produced in the flow path chamber is conveyed to the dehydrator 6 through the pipe 4. In the dehydrator 6, the pellets 30 are separated from the hot water, and the hot water is returned to the tank 7. On the other hand, the slurry 3 which is a mixture of a small amount of hot water and the pellets 30 is conveyed to the centrifugal dehydration dryer 8. In the centrifugal dehydration dryer 8, a small amount of hot water adhering to the pellets 30 is separated. Then, the pellets 30 separated from the small amount of hot water and dried in the centrifugal dehydration dryer 8 are conveyed to the vibrating sieve 9, and the small amount of hot water separated in the centrifugal dehydration dryer 8 is returned to the tank 7. Thereafter, the pellets 30 are sorted out by size in the vibrating sieve 9.

In the manner described above, the pellets 30 can be manufactured by the pelletization system 100.

### <Basic Configuration of Resin Cutting Apparatus>

Next, the configuration of the resin cutting apparatus 2 which is a component of the pelletization system 100 will be described.

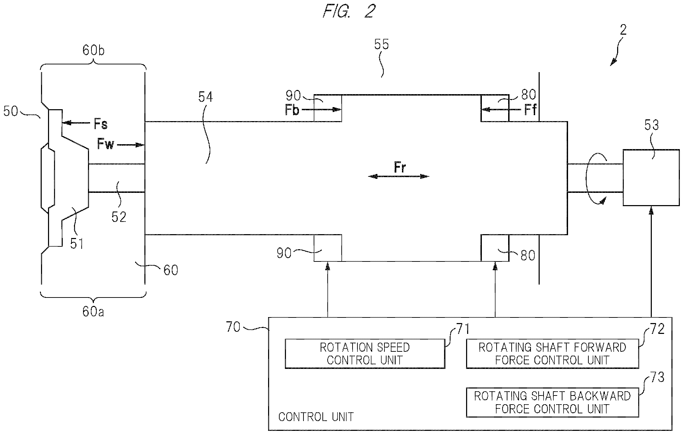

FIG. 2 is a diagram illustrating a schematic configuration of the resin cutting apparatus.

In FIG. 2, the resin cutting apparatus 2 includes a die 50, a cutter head 51, a rotating shaft 52, a motor 53, a sleeve 54, a housing 55, a flow path chamber 60, an inlet 60a, and an outlet 60b.

The die 50 is provided on a resin discharge side of an extruder that kneads and extrudes the resin, and the die 50 is provided with a plurality of nozzles. The resin extruded from the extruder is discharged from each of the plurality of nozzles.

The cutter head 51 is arranged so as to be pressed to the die 50, and the cutter head 51 is provided with a plurality of cutter blades. The plurality of cutter blades have the function of cutting the resin discharged from the plurality of nozzles provided in the die 50 into pellets.

Further, the rotating shaft 52 is attached to the cutter head 51, and the motor 53 is attached to this rotating shaft 52. As a result, the cutter head 51 is attached to the rotating shaft 52 that is rotated by the motor 53, and is thus configured to be rotatable.

The sleeve 54 configured to be slidable in the axial direction of the rotating shaft 52 is provided around the rotating shaft 52, and the housing 55 is provided on the outside of this sleeve 54. Here, the rotating shaft 52 is configured to be rotatable with respect to the sleeve 54, but is not configured to be movable relative to the sleeve 54 in the axial direction of the rotating shaft 52. Namely, the rotating shaft 52 and the sleeve 54 are configured to move integrally in the axial direction of the rotating shaft 52. The sleeve 54 is configured to be movable relative to the housing 55 in the axial direction of the rotating shaft 52.

The flow path chamber 60 constitutes a flow path space that is in contact with the cutter head 51. The flow path chamber 60 is provided with the inlet 60a through which a fluid such as hot water flows in and an outlet 60b through which the fluid and pellets flow out of the flow path chamber 60.

### <<Configuration Example of Die>>

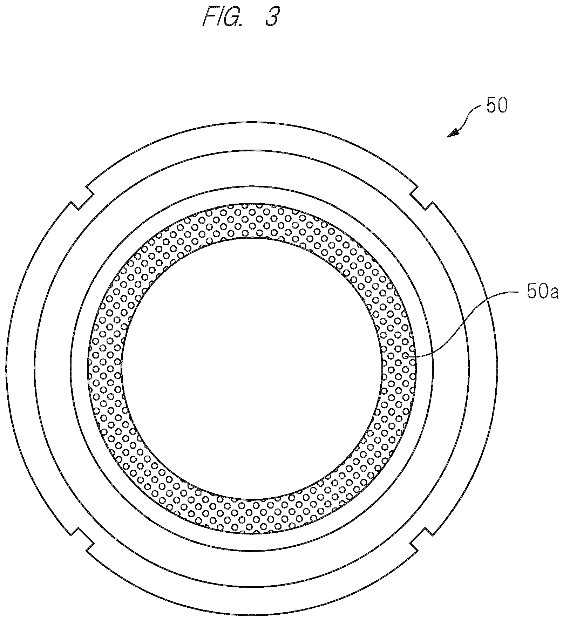

FIG. 3 is a plan view illustrating a schematic configuration example of the die.

In FIG. 3, for example, the die 50 has a substantially circular planar shape and has a plurality of nozzles 50a. The resin that has been kneaded and melted in the extruder is discharged from each of the plurality of nozzles 50a.

### <<Configuration Example of Cutter Head>>

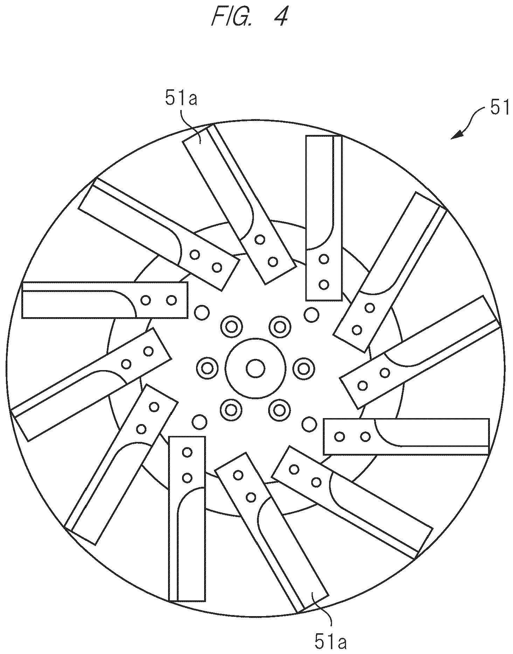

FIG. 4 is a plan view illustrating a schematic configuration example of the cutter head.

In FIG. 4, for example, the cutter head 51 has a substantially circular planar shape and is provided with a plurality of cutter blades 51a. Each of the plurality of cutter blades 51a has a substantially rectangular planar shape.

The cutter head 51 is configured to rotate while being pressed to the die 50, whereby the resin discharged from the plurality of nozzles 50a provided in the die 50 is cut by the plurality of cutter blades 51a provided in the cutter head 51.

<Basic Operation of Resin Cutting Apparatus>

The resin cutting apparatus 2 is configured as described above, and the operation thereof will be described below with reference to FIG. 2.

First, the resin kneaded in the extruder is discharged in a molten state from the plurality of nozzles provided in the die 50 into the flow path chamber 60. The discharged molten resin is cut by the plurality of cutter blades provided in the cutter head 51 which is attached to the rotating shaft 52 rotated by the motor 53 and is rotated at high speed. The cut resin is then cooled and solidified by the hot water flowing in from the inlet 60a of the flow path chamber 60, thereby producing pellets. At this time, since the hot water that has flown into the flow path chamber 60 flows out of the flow path chamber 60 through the outlet 60b, the produced pellets are also discharged through the outlet 60b. The slurry which is a mixture of the discharged hot water and pellets is conveyed to the dehydrator 6 through the pipe 4, for example, as illustrated in FIG. 1. The subsequent operation is the same as that described in the operation of the pelletization system illustrated in FIG. 1. In this manner, in the resin cutting apparatus 2, solidified pellets can be manufactured by cutting the molten resin.

### <Necessity to Control Cutter Blade Pressing Force>

Here, the cutter blade pressing force for pressing the plurality of cutter blades provided in the cutter head 51 to the die 50 needs to be controlled to an appropriate constant value. This is because since the cutter blade wears out when the cutter blade is pressed to the die 50, the amount of wear on the cutter blade increases if the cutter blade pressing force for pressing the cutter blade to the die is too large, whereas the cutter blade will come off the die, causing such cutting troubles that the resin cannot be properly cut into pellets if the cutter blade pressing force is too small. Therefore, the resin cutting apparatus 2 has a configuration for controlling the cutter blade pressing force to be constant. This configuration will be described below.

### <Configuration for Controlling Cutter Blade Pressing Force>

In FIG. 2, the resin cutting apparatus 2 includes a control unit 70, a rotating shaft forward force generating unit 80, and a rotating shaft backward force generating unit 90.

The rotating shaft forward force generating unit 80 is configured to generate a rotating shaft forward force Ff on the rotating shaft 52. For example, the rotating shaft forward force generating unit 80 is configured to generate a rotating shaft forward force by the pressure of a pressure medium injected into a first gap chamber. Specifically, the product of the pressure receiving area of the first gap chamber and the pressure of the pressure medium is the rotating shaft forward force Ff. The rotating shaft forward force Ff is a force in a direction that brings the rotating shaft 52 (sleeve 54) closer to the die 50, and is a force generated by the rotating shaft forward force generating unit 80.

The rotating shaft backward force generating unit 90 is configured to generate a rotating shaft backward force Fb on the rotating shaft 52. For example, the rotating shaft backward force generating unit 90 is configured to generate a rotating shaft backward force by the pressure of a pressure medium injected into a second gap chamber. Specifically, the product of the pressure receiving area of the second gap chamber and the pressure of the pressure medium is the rotating shaft backward force Fb. The rotating shaft backward force Fb is a force in a direction that brings the rotating shaft 52 (sleeve 54) away from the die 50, and is a force generated by the rotating shaft backward force generating unit 90.

The control unit 70 is configured to control the cutter blade pressing force for pressing the plurality of cutter blades to the die 50, and includes a rotation speed control unit 71, a rotating shaft forward force control unit 72, and a rotating shaft backward force control unit 73.

The rotation speed control unit 71 is configured to control the rotation speed of the rotating shaft 52. Specifically, it is configured to control the rotation speed of the rotating shaft 52 by controlling the rotation of the motor 53 to which the rotating shaft 52 is attached.

The rotating shaft forward force control unit 72 is configured to control the rotating shaft forward force Ff by adjusting the pressure of the pressure medium injected into the first gap chamber.

The rotating shaft backward force control unit 73 is configured to control the rotating shaft backward force Fb by adjusting the pressure of the pressure medium injected into the second gap chamber.

The control unit 70 configured as above is configured to control the cutter blade pressing force expressed by, for example, the following relational expression to be constant.

Specifically, when the cutter blade pressing force is F, the rotating shaft forward force is Ff, a cutter blade thrust force which is generated by the rotation of the plurality of cutter blades and whose magnitude changes depending on the rotation speed of the rotating shaft is Fs, the rotating shaft backward force is Fb, a backward force caused by the fluid pressure of the fluid filled in the flow path chamber is Fw, and a sliding resistance force caused by the forward or backward movement of the rotating shaft is Fr, the cutter blade pressing force F is expressed as F=Ff+Fs-Fb-Fw±Fr.

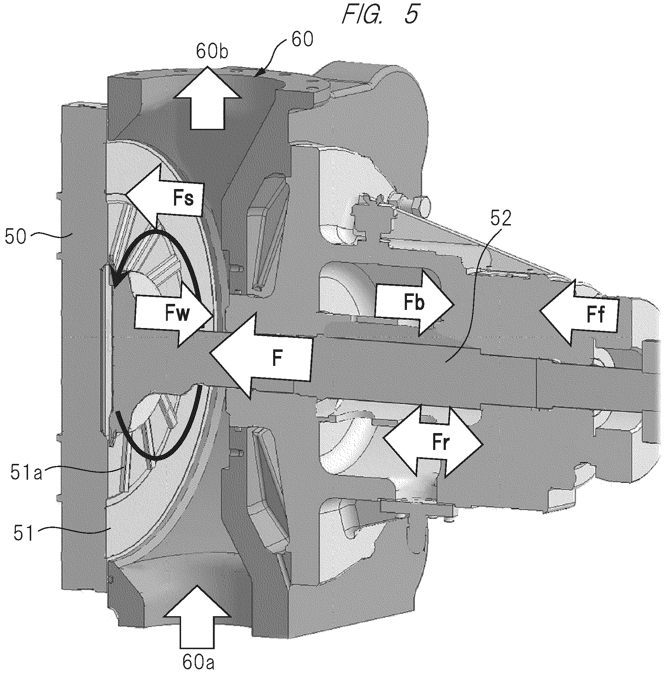

For example, FIG. 5 is a diagram illustrating a schematic configuration of a main part of the resin cutting apparatus. In FIG. 5, the rotating shaft forward force Ff, the cutter blade thrust force Fs, the rotating shaft backward force Fb, the backward force Fw caused by the fluid pressure of the fluid filled in the flow path chamber, and the sliding resistance force Fr are illustrated.

At this time, "Fw" and "Fr" are approximately fixed values (constants) that are determined by the structure of the resin cutting apparatus 2, and can be estimated in advance. Therefore, in order to keep the cutter blade pressing force F constant, the control unit 70 of the resin cutting apparatus 2 controls the value of "Ff+Fs-Fb" to be constant. An operation example of the control unit 70 will be described below.

### <Operation Example of Control Unit 70>

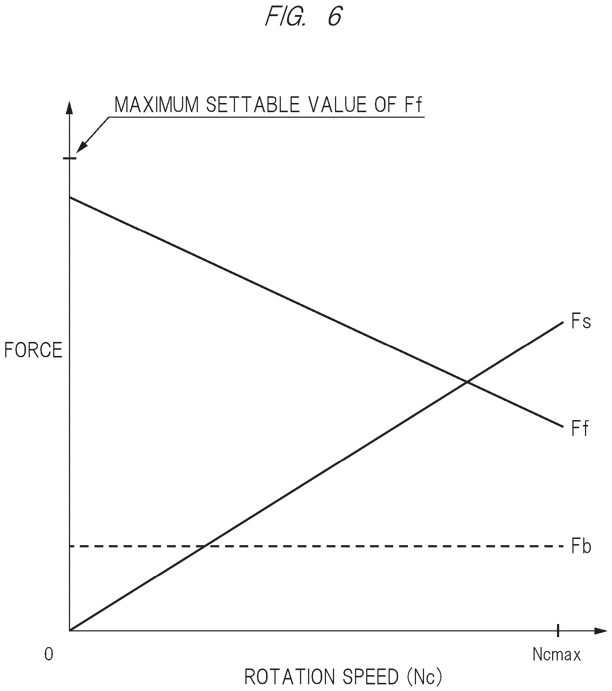

FIG. 6 is a graph for describing an operation example of the control unit 70.

In FIG. 6, the horizontal axis represents the rotation speed (Nc) of the rotating shaft, and the vertical axis represents the force. First, when the control unit 70 operates the motor 53, the rotation speed Nc of the rotating shaft 52 also increases in accordance with the increase in the rotation speed of the motor. At this time, the rotation speed Nc of the rotating shaft 52 is adjusted in accordance with the resin production amount of the pelletizer 10. Namely, the rotation speed Nc of the rotating shaft 52 is reduced when the resin production amount of the pelletizer 10 is small, and the rotation speed Nc of the rotating shaft 52 is increased when the resin production amount of the pelletizer 10 is large. Here, the cutter blade thrust force Fs has a characteristic that it increases as the rotation speed Nc of the rotating shaft 52 increases.

For this reason, in order to keep "Ff+Fs-Fb" constant even when the rotation speed Nc changes, it is necessary to control the rotating shaft forward force Ff and the rotating shaft backward force Fb. Specifically, as illustrated in FIG. 6, as the rotation speed Nc of the rotating shaft 52 increases, the rotating shaft forward force control unit 72 reduces the rotating shaft forward force Ff so as to offset the increase in the cutter blade thrust force Fs. Also, the rotating shaft backward force control unit 73 performs control such that the rotating shaft backward force Fb becomes constant even if the rotation speed Nc of the rotating shaft 52 changes. Here, the reason why the rotating shaft backward force control unit 73 controls the rotating shaft backward force Fb to be constant even if the rotation speed Nc of the rotating shaft 52 changes is that importance is placed on the stability of control and ease of adjustment. Namely, if the rotating shaft forward force Ff is variably controlled by the rotating shaft forward force control unit 72 and the rotating shaft backward force Fb is variably controlled by the rotating shaft backward force control unit 73, the control becomes complicated. Therefore, if the rotating shaft forward force Ff can be reduced by the rotating shaft forward force control unit 72 so as to offset the increase in the cutter blade thrust force Fs, there will be no need to variably control the rotating shaft backward force Fb by the rotating shaft backward force control unit 73, and the stability of control and the ease of adjustment can be achieved.

In this manner, in the operation example of the control unit 70 illustrated in FIG. **6****,** the cutter blade pressing force F can be kept constant even if the rotation speed Nc of the rotating shaft 52 changes.

### <Considerations for Improvement>

As described above, since the cutter blade thrust force Fs increases as the rotation speed Nc of the rotating shaft 52 increases, the rotating shaft forward force control unit 72 performs control to reduce the rotating shaft forward force Ff so as to offset the increase in the cutter blade thrust force Fs. For example, in order to make the description easily understood, FIG. 6 illustrates an example in which the rotating shaft forward force Ff decreases linearly as the rotation speed Nc of the rotating shaft 52 increases.

However, in reality, the rotating shaft forward force control unit 72 controls the rotating shaft forward force Ff in accordance with the rotation speed Nc of the rotating shaft 52 based on a curve expressed by a quadratic function referred to as a "pressing curve" such that the sum of the rotating shaft forward force Ff and the cutter blade thrust force Fs becomes constant. In other words, the "pressing curve" is a relational expression for performing control such that the sum of the rotating shaft forward force Ff and the cutter blade thrust force Fs remains a constant value even if the rotation speed Nc of the rotating shaft 52 changes. By the control by the rotating shaft forward force control unit 72 using this "pressing curve", the cutter blade is pressed to the die 50 with a substantially constant force at any rotation speed Nc.

The cutter blade pressing force F is controlled to be constant in this way, but the cutter blade pressing force F may deviate from the constant value due to various factors as the resin cutting apparatus continuously performs the resin cutting operation. In this case, abnormal wear of the cutter blade and troubles due to cutting failure may occur. In this regard, when the cutter blade pressing force F deviates from the constant value, it is conceivable to adjust the rotating shaft forward force Ff such that the cutter blade pressing force F becomes an appropriate value. However, since it is desired to maintain the relationship between the rotating shaft forward force Ff and the cutter blade thrust force Fs ("pressing curve"), the rotating shaft forward force Ff is not changed, but the rotating shaft backward force Fb is adjusted such that the cutter blade pressing force F becomes an appropriate value. The adjustment of the rotating shaft backward force Fb is performed manually.

Specifically, the worker performs the following works:
(1) Check the amount of wear on the cutter blade (every day or half day).
(2) Judge whether the amount of wear is appropriate or not.
(3) Judge whether the value of the rotating shaft backward force Fb should be increased or decreased.
(4) Determine how much to change the value of the rotating shaft backward force Fb.
(5) Return to (1) and repeat.

For this reason, if the rotating shaft backward force Fb is adjusted manually, it becomes necessary to periodically check and record the amount of wear on the cutter blade, which is time-consuming and laborious. Furthermore, the accuracy of the adjustment depends on the skill of the worker. Therefore, in this embodiment, an ingenuity for adjusting the rotating shaft backward force Fb capable of reducing the workload of the worker and without depending on the skill of the worker is applied. The technical idea of this embodiment in which this ingenuity is applied will be described below.

### <Basic Idea in Embodiment>

The basic idea in this embodiment is a technical idea related to the control technique for a resin cutting apparatus that manufactures pellets by cutting a resin discharged from an extruder configured to knead and extrude the resin. Also, the basic idea is an idea in which the amount of wear on the plurality of cutter blades is detected and then the magnitude of the rotating shaft backward force Fb applied to the rotating shaft is automatically controlled based on the detected amount of wear on the plurality of cutter blades, in the technical idea of controlling the cutter blade pressing force for pressing the plurality of cutter blades configured to cut a resin into pellets to a die provided on the resin discharge side of the extruder.

Specifically, the method of controlling the resin cutting apparatus in this embodiment includes a wear amount detecting process of detecting the amount of wear on a plurality of cutter blades during the operation of the resin cutting apparatus configured to cut the resin into pellets and a rotating shaft backward force controlling process of controlling the magnitude of the rotating shaft backward force Fb applied to the rotating shaft attached to a cutter head in which the plurality of cutter blades are arranged, based on the amount of wear on the plurality of cutter blades detected in the wear amount detecting process.

Therefore, according to the basic idea, the adjustment of the rotating shaft backward force Fb, which has been adjusted manually, can be automated by providing the wear amount detecting process and the rotating shaft backward force controlling process. As a result, according to the basic idea, the magnitude of the rotating shaft backward force Fb can be adjusted to an appropriate value regardless of the skill of the worker. In this way, according to the basic idea, the cutter blade pressing force F can be automatically controlled to be constant, and it is thus possible to suppress the abnormal wear of the cutter blade and the troubles due to cutting failure. Therefore, according to the basic idea, in the method of manufacturing pellets in which pellets are manufactured by cutting a resin, it is possible to suppress the shortening in the lifetime of the cutter blade and the degradation in the quality of the manufactured pellets.

In the following, an embodiment in which the basic idea is embodied will be described.

### <Embodiment>

The basic idea described above is characterized by including the wear amount detecting process and the rotating shaft backward force controlling process, and in order to embody this basic idea, it is necessary to embody the wear amount detecting process and the rotating shaft backward force controlling process. Therefore, in the following, each of an embodiment of the wear amount detecting process and an embodiment of the rotating shaft backward force controlling process will be described.

### <<Embodiment of Wear Amount Detecting Process>>

If the cutter blade pressing force F deviates from an appropriate value, abnormal wear of the cutter blade and cutting failure occur. In this regard, the abnormal wear of the cutter blade and the cutting failure are determined based on the amount of wear on the cutter blade. Therefore, in order to determine whether the abnormal wear of the cutter blade and the cutting failure have occurred, it is necessary to detect the amount of wear on the cutter blade. Therefore, in the embodiment, for example, a wear amount detection position sensor is used to detect the amount of wear on the cutter blade. Specifically, the wear amount detection position sensor is provided on the rotating shaft so as to operate together with the forward and backward movement of the rotating shaft. In this way, it is possible to detect the position of the cutter head attached to the rotating shaft by the wear amount detection position sensor. Namely, during the operation of the resin cutting apparatus for cutting the resin into pellets, the plurality of cutter blades arranged in the rotating cutter head are pressed to the die. This causes the cutter blades to wear, and this wear of the cutter blades causes the position of the cutter head to change. Also, the change in the position of the cutter head means the change in the position of the rotating shaft attached to the cutter head. In this regard, if the wear amount detection position sensor is provided on the rotating shaft, the position of the rotating shaft and the position of the cutter head attached to the rotating shaft can be detected by this wear amount detection position sensor. This means that the amount of wear on the cutter blade can be detected indirectly based on the position of the cutter head. As described above, in the embodiment, the wear amount of the cutter blade is detected by providing the wear amount detection position sensor, which operates together with the forward and backward movement of the rotating shaft, on the rotating shaft.

Here, a forward/backward movement control position sensor which operates together with the forward and backward movement of the rotating shaft is provided on the rotating shaft. Namely, in order to bring the plurality of cutter blades arranged in the cutter head into contact with and away from the die, the rotating shaft attached to the cutter head is moved forward and backward. At this time, the control for moving the rotating shaft forward and backward is performed based on the output from the forward/backward movement control position sensor. For this reason, it is conceivable to use the already provided forward/backward movement control position sensor as the wear amount detection position sensor.

However, according to the studies by the inventors, it has become clear that it is difficult to use the forward/backward movement control position sensor as the wear amount detection position sensor. This point will be described below. For example, the forward/backward movement control position sensor is configured to detect the forward and backward movement within a range of ±8 mm from the starting point, and the detection position accuracy is about 0.1 mm. On the other hand, the accurate detection with an accuracy of 0.01 mm is required for the amount of wear on the cutter blade, and the resolution of the forward/backward movement control position sensor is not sufficient for this purpose. In other words, in order to detect the amount of wear on the cutter blade, it is necessary to accurately monitor the position of the cutter head (position of the rotating shaft) in units of 0.01 mm, and there is a concern that the forward/backward movement control position sensor may not have sufficient resolution. Furthermore, if the monitoring of the position of the cutter head (position of the rotating shaft) is inaccurate, the automatic control of the rotating shaft backward force Fb will not work properly, resulting in malfunction and causing troubles.

Therefore, in the embodiment, in addition to the forward/backward movement control position sensor, the wear amount detection position sensor for detecting the amount of wear on the cutter blade is provided. Namely, the resin cutting apparatus is provided with the forward/backward movement control position sensor and the wear amount detection position sensor as position detection sensors. In particular, the position detection accuracy of the wear amount detection position sensor is higher than the position detection accuracy of the forward/backward movement control position sensor. Specifically, the position detection accuracy of the forward/backward movement control position sensor is on the order of 0.1 mm, whereas the position detection accuracy of the wear amount detection position sensor is on the order of 0.01 mm. As a result, in the embodiment, the amount of wear on the cutter blade, which is a very small amount, can be detected with high accuracy.

Next, a configuration example of the resin cutting apparatus provided with the wear amount detection position sensor will be described.

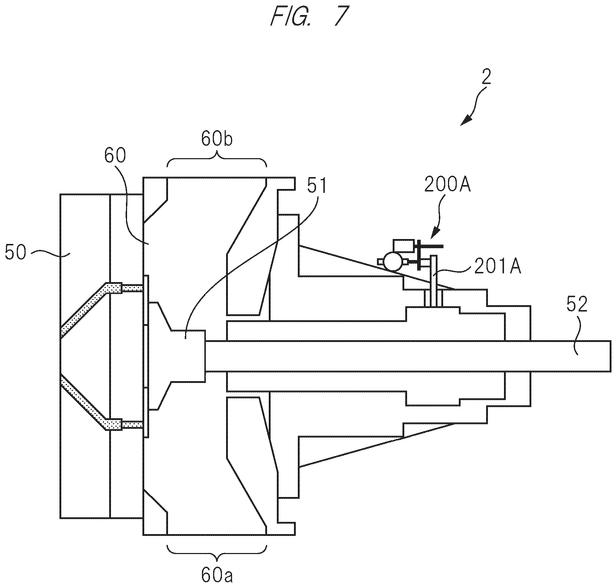

FIG. 7 is a diagram illustrating a schematic configuration of the resin cutting apparatus 2 in the embodiment. In FIG. 7, the rotating shaft 52 is provided with a wear amount detection position sensor 200A. This wear amount detection position sensor 200A includes a detection plate 201, and this detection plate 201 is attached to the rotating shaft 52 so as to be movable following the forward and backward movement of the rotating shaft 52. Also, the wear amount detection position sensor 200A is configured to detect the position of the rotating shaft 52 (position of the cutter head) by using the detection plate 201 that follows the forward and backward movement of the rotating shaft 52.

Note that the resin cutting apparatus 2 is also provided with the forward/backward movement control position sensor having a similar configuration to the wear amount detection position sensor 200A, but this is not illustrated in FIG. 7. This forward/backward movement control position sensor is also configured to detect the position of the rotating shaft by using a detection plate.

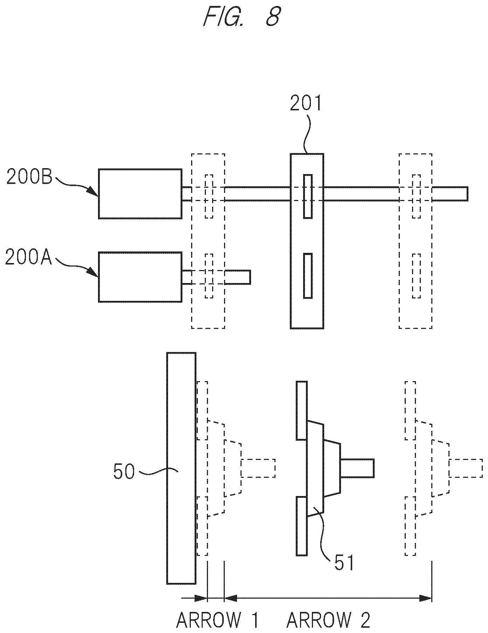

FIG. 8 is a diagram for describing a division between an operation range of the wear amount detection position sensor 200A and an operation range of the forward/backward movement control position sensor 200B. In FIG. 8, the wear amount detection position sensor 200A is configured to detect the position of the cutter head 51 using the detection plate 201, and is configured to detect the position of the cutter head 51 in a nearby region where the cutter head 51 comes into contact with the die 50 (region indicated by an arrow 1 in FIG. 8).

On the other hand, the forward/backward movement control position sensor 200B is also configured to detect the position of the cutter head 51 using the detection plate 201, and is configured to detect the position of the cutter head 51 in a region indicated by an arrow 2 in FIG. 8.

In other words, in the resin cutting apparatus in the embodiment, the wear amount detection position sensor 200A is configured to detect the position of the cutter head 51 in the nearby region where the cutter head 51 comes into contact with the die 50, and it is thus possible to detect the wear amount of the cutter blade with high accuracy.

### <<Embodiment of Rotating Shaft Backward Force Controlling Process>>

Next, an embodiment of the rotating shaft backward force controlling process will be described.

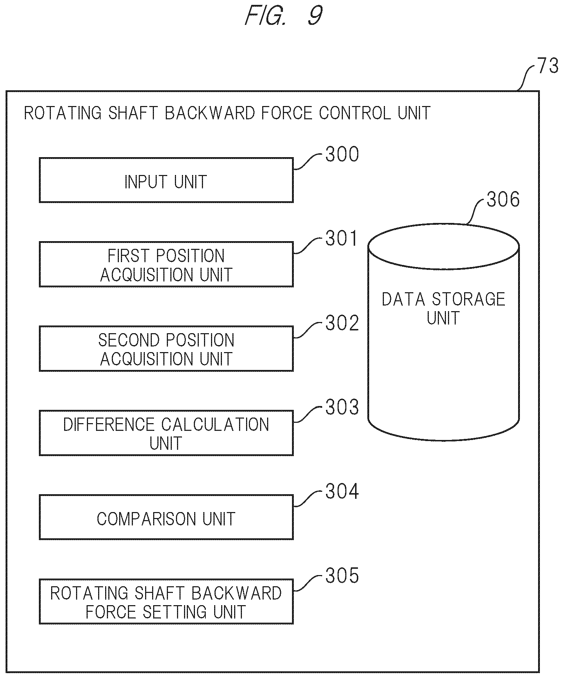

FIG. 9 is a functional block diagram of the rotating shaft backward force control unit 73.

In FIG. 9, the rotating shaft backward force control unit 73 includes an input unit 300, a first position acquisition unit 301, a second position acquisition unit 302, a difference calculation unit 303, a comparison unit 304, a rotating shaft backward force setting unit 305, and a data storage unit 306.

The input unit 300 is configured to receive output data from the wear amount detection position sensor 200A, for example. Also, the input unit 300 is configured to receive a preset upper limit value of the wear amount. Then, the output data from the wear amount detection position sensor 200A input to the input unit 300 and the preset upper limit value of the wear amount are stored in the data storage unit 306. In other words, the data storage unit 306 has a function of storing various data.

The first position acquisition unit 301 is configured to acquire a "first position" of the cutter head in which the plurality of cutter blades are arranged, based on the output data from the wear amount detection position sensor 200A stored in the data storage unit 306. Here, the "first position" refers to the position at which the cutter head is disposed when the cutter head is brought into contact with the surface of the die. The data regarding the "first position" acquired by the first position acquisition unit 301 is stored in the data storage unit 306.

The second position acquisition unit 302 is configured to acquire a "second position" of the cutter head in which the plurality of cutter blades are arranged, based on the output data from the wear amount detection position sensor 200A stored in the data storage unit 306. Here, the "second position" refers to the position at which the cutter head is disposed after the resin cutting operation in the resin cutting apparatus has been performed for a predetermined period of time. The data regarding the "second position" acquired by the second position acquisition unit 302 is stored in the data storage unit 306.

The difference calculation unit 303 is configured to calculate the difference between the "first position" and the "second position" based on the "first position" and the "second position" stored in the data storage unit 306. The difference between the "first position" and the "second position" corresponds to the amount of wear on the cutter blade. In other words, the difference calculation unit 303 calculates the amount of wear on the cutter blade by calculating the difference between the "first position" and the "second position". The data regarding the difference between the "first position" and the "second position" corresponding to the amount of wear is stored in the data storage unit 306.

Note that the difference calculation unit 303 calculates the amount of wear after the resin cutting operation in the resin cutting apparatus has been performed for a predetermined period of time, and the difference calculation unit 303 may also have a function of, for example, estimating the amount of wear after a period of time corresponding to several times the predetermined period of time.

Specifically, the difference between the "first position" and the "second position" calculated by the difference calculation unit 303 corresponds to the amount of wear after the resin cutting operation has been performed for a predetermined period of time, and it is possible to estimate the amount of wear after the resin cutting operation has been performed for a constant multiple of the predetermined period of time by calculating a constant multiple of this difference. For example, if the difference between the "first position" and the "second position" calculated by the difference calculation unit 303 is assumed to be the amount of wear after the resin cutting operation has been performed for two hours, the difference calculation unit 303 is configured to be able to calculate the amount of wear after the resin cutting operation has been performed for 24 (2 × 12) hours by multiplying this difference by 12.

The comparison unit 304 is configured to compare, for example, the difference between the "first position" and the "second position" stored in the data storage unit 306 with the upper limit value of the wear amount stored in the data storage unit 306. In other words, the comparison unit 304 is configured to compare the amount of wear after the resin cutting operation has been performed for a predetermined period of time with the upper limit value of the wear amount, and determine whether the amount of wear after the resin cutting operation has been performed for a predetermined period of time is larger than or smaller than the upper limit value of the wear amount. Then, the comparison result from the comparison unit 304 is stored in the data storage unit 306.

Note that the comparison unit 304 may be configured to compare the amount of wear after the resin cutting operation has been performed for a predetermined period of time with a constant multiple of the upper limit value of the wear amount. In this case, it can be found from the comparison result of the comparison unit 304 that abnormal wear with extremely large wear amount (a constant multiple of the upper limit value of the wear amount) has occurred after the resin cutting operation has been performed for a predetermined period of time.

The rotating shaft backward force setting unit 305 is configured to set the magnitude of the rotating shaft backward force applied to the rotating shaft based on the comparison result of the comparison unit 304. For example, when the comparison result by the comparison unit 304 is "wear amount after the resin cutting operation is performed for a predetermined period of time is larger than upper limit value of wear amount", there is a high possibility that excessive wear has occurred. Based on this result, the rotating shaft backward force setting unit 305 is configured to increase (raise) the magnitude of the rotating shaft backward force. On the other hand, when the comparison result by the comparison unit 304 is "wear amount after the resin cutting operation is performed for a predetermined period of time is smaller than upper limit value of wear amount", the rotating shaft backward force setting unit 305 is configured to reduce (lower) the magnitude of the rotating shaft backward force. Furthermore, when the comparison result by the comparison unit 304 is "wear amount after the resin cutting operation is performed for a predetermined period of time is equal to upper limit value of wear amount", the rotating shaft backward force setting unit 305 is configured to maintain the magnitude of the rotating shaft backward force in status quo. Then, the setting information regarding the magnitude of the rotating shaft backward force set by the rotating shaft backward force setting unit 305 is stored in the data storage unit 306.

Next, the rotating shaft backward force control unit 73 is configured to control the rotating shaft backward force applied to the rotating shaft based on the magnitude of the rotating shaft backward force set by the rotating shaft backward force setting unit 305. In other words, the rotating shaft backward force control unit 73 is configured to control the rotating shaft backward force applied to the rotating shaft based on the setting information regarding the magnitude of the rotating shaft backward force stored in the data storage unit 306. The rotating shaft backward force control unit 73 is configured as described above.

### <<Control Operation (Control Method) of Rotating Shaft Backward Force>>

Next, a control operation example of the rotating shaft backward force will be described.

Two control operation examples of the rotating shaft backward force will be described below.

### (1) First control operation example

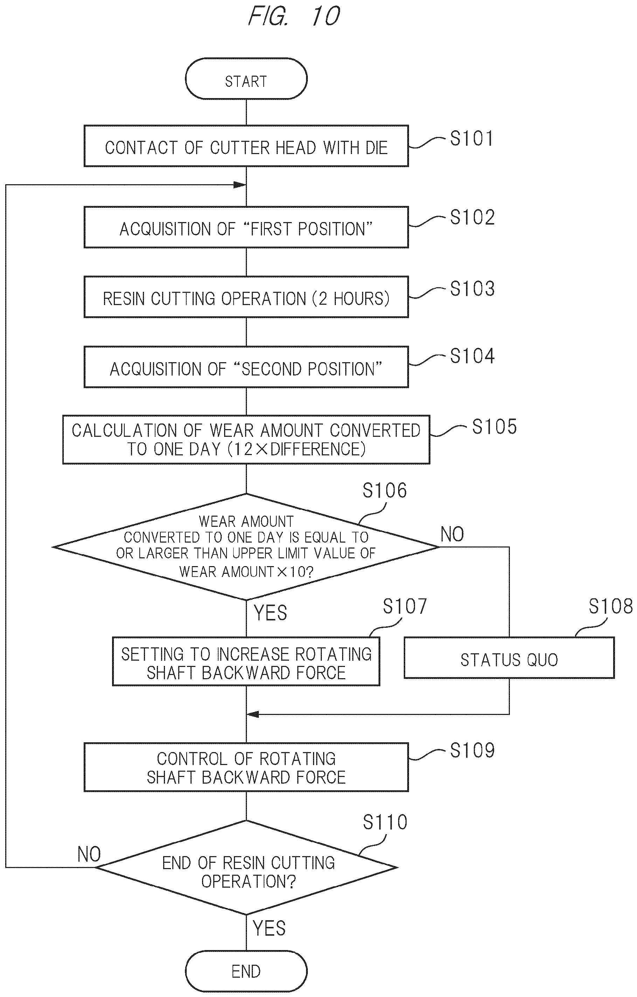

FIG. 10 is a flowchart illustrating the flow of the first control operation example.

In FIG. 10, first, a preset upper limit value of the wear amount is stored in the data storage unit 306 as a premise. Then, the control unit 70 of the resin cutting apparatus 2 moves the rotating shaft 52 forward based on the output of the forward/backward movement control position sensor 200B and the output of the wear amount detection position sensor 200A, thereby bringing the cutter head 51 attached to the rotating shaft 52 into contact with the die 50 (S101). For example, the control unit 70 moves the rotating shaft 52 forward with a determined pressing force to bring the cutter head 51 into contact with the die 50. At this time, the position of the rotating shaft 52 until just before the cutter head 51 comes into contact with the die 50 is detected by the forward/backward movement control position sensor 200B, and then the position of the rotating shaft 52 until the cutter head 51 comes into contact with the die 50 is detected by switching the sensor to the wear amount detection position sensor 200A which has higher position detection accuracy than the forward/backward movement control position sensor 200B.

Next, after the output from the wear amount detection position sensor 200A is input to the input unit 300 of the rotating shaft backward force control unit 73, the output data of the wear amount detection position sensor 200A input to the input unit 300 is stored in the data storage unit 306. Then, the first position acquisition unit 301 acquires the "first position" of the cutter head 51 based on the output data of the wear amount detection position sensor 200A stored in the data storage unit 306 (S102). The acquired "first position" of the cutter head 51 is stored in the data storage unit 306.

Thereafter, the resin cutting operation is performed for two hours in the resin cutting apparatus 2 (S103). This causes the wear of the plurality of cutter blades arranged in the cutter head 51 to progress. Then, after the output from the wear amount detection position sensor 200A is input to the input unit 300 of the rotating shaft backward force control unit 73, the output data of the wear amount detection position sensor 200A input to the input unit 300 is stored in the data storage unit 306. Thereafter, the second position acquisition unit 302 acquires the "second position" of the cutter head 51 based on the output data of the wear amount detection position sensor 200A stored in the data storage unit 306 (S104). The acquired "second position" of the cutter head 51 is stored in the data storage unit 306.

Next, the difference calculation unit 303 receives the "first position" and the "second position" stored in the data storage unit 306, and then calculates the difference between the "first position" and the "second position". This difference corresponds to the amount of wear on the cutter blade per two hours. Further, the difference calculation unit 303 performs a calculation to multiply the calculated amount of wear on the cutter blade per two hours by 12 to calculate the amount of wear converted to one day (S105). This wear amount converted to one day is stored in the data storage unit 306.

Next, the comparison unit 304 receives the wear amount converted to one day and the upper limit value of the wear amount stored in the data storage unit 306, and then compares the received wear amount converted to one day with the upper limit value of the wear amount multiplied by 10 (S106). Then, the rotating shaft backward force setting unit 305 sets the magnitude of the rotating shaft backward force Fb based on the comparison result of the comparison unit 304. Specifically, when the comparison result by the comparison unit 304 is "wear amount converted to one day is equal to or larger than upper limit value of wear amount multiplied by 10", the rotating shaft backward force setting unit 305 determines that abnormal wear has occurred and sets the magnitude of the rotating shaft backward force to be increased (raising setting) (S107). On the other hand, when the comparison result by the comparison unit 304 is "wear amount converted to one day is smaller than upper limit value of wear amount multiplied by 10", the rotating shaft backward force setting unit 305 determines that abnormal wear has not occurred and sets the magnitude of the rotating shaft backward force to maintain status quo (S108). Note that the setting information is stored in the data storage unit 306.

Then, the rotating shaft backward force control unit 73 controls the rotating shaft backward force Fb based on the setting information stored in the data storage unit 306 (S109). For example, when the setting information is the raising setting, the rotating shaft backward force control unit 73 performs control to increase the rotating shaft backward force Fb. On the other hand, when the setting information is the status quo setting, the rotating shaft backward force control unit 73 performs control to maintain the rotating shaft backward force Fb in status quo.

Thereafter, when the resin cutting operation of the resin cutting apparatus 2 is to be ended (S110), the control unit 70 performs control to end the resin cutting operation of the resin cutting apparatus 2. On the other hand, when the resin cutting operation of the resin cutting apparatus 2 is to be continued, the flow returns to S102 and the same operation is repeated.

As described above, according to the first control operation example, the wear amount is judged within two hours, and abnormal wear (10 times the upper limit value of the wear amount) can be quickly and automatically detected.

### (2) Second control operation example

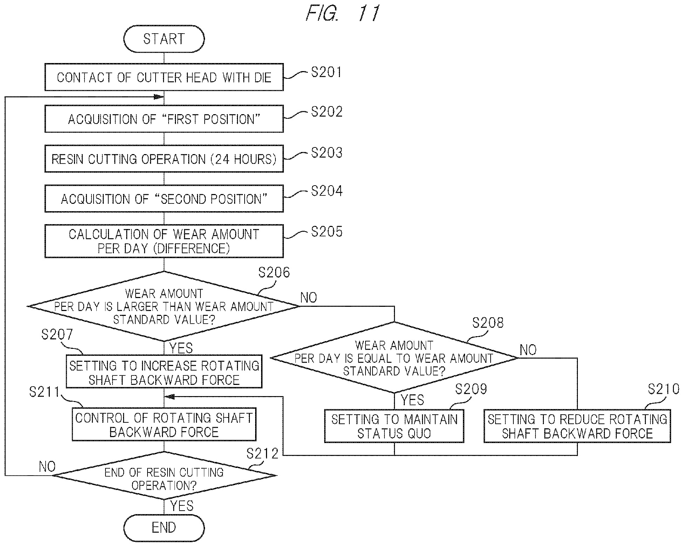

FIG. 11 is a flowchart illustrating the flow of the second control operation example.

In FIG. 11, first, a preset wear amount standard value is stored in the data storage unit 306 as a premise. Then, the control unit 70 of the resin cutting apparatus 2 moves the rotating shaft 52 forward based on the output of the forward/backward movement control position sensor 200B and the output of the wear amount detection position sensor 200A, thereby bringing the cutter head 51 attached to the rotating shaft 52 into contact with the die 50 (S201). For example, the control unit 70 moves the rotating shaft 52 forward with a determined pressing force to bring the cutter head 51 into contact with the die 50. At this time, the position of the rotating shaft 52 until just before the cutter head 51 comes into contact with the die 50 is detected by the forward/backward movement control position sensor 200B, and then the position of the rotating shaft 52 until the cutter head 51 comes into contact with the die 50 is detected by switching the sensor to the wear amount detection position sensor 200A which has higher position detection accuracy than the forward/backward movement control position sensor 200B.

Next, after the output from the wear amount detection position sensor 200A is input to the input unit 300 of the rotating shaft backward force control unit 73, the output data of the wear amount detection position sensor 200A input to the input unit 300 is stored in the data storage unit 306. Then, the first position acquisition unit 301 acquires the "first position" of the cutter head 51 based on the output data of the wear amount detection position sensor 200A stored in the data storage unit 306 (S202). The acquired "first position" of the cutter head 51 is stored in the data storage unit 306.

Thereafter, the resin cutting operation is performed for 24 hours in the resin cutting apparatus 2 (S203). This causes the wear of the plurality of cutter blades arranged in the cutter head 51 to progress. Then, after the output from the wear amount detection position sensor 200A is input to the input unit 300 of the rotating shaft backward force control unit 73, the output data of the wear amount detection position sensor 200A input to the input unit 300 is stored in the data storage unit 306. Thereafter, the second position acquisition unit 302 acquires the "second position" of the cutter head 51 based on the output data of the wear amount detection position sensor 200A stored in the data storage unit 306 (S204). The acquired "second position" of the cutter head 51 is stored in the data storage unit 306.

Next, the difference calculation unit 303 receives the "first position" and the "second position" stored in the data storage unit 306, and then calculates the difference between the "first position" and the "second position". This difference corresponds to the amount of wear on the cutter blade per day. The difference between the "first position" and the "second position" corresponding to the amount of wear per day is stored in the data storage unit 306.

Next, the comparison unit 304 receives the amount of wear per day and the wear amount standard value stored in the data storage unit 306, and then compares the received amount of wear per day with the wear amount standard value (S206). Then, the rotating shaft backward force setting unit 305 sets the magnitude of the rotating shaft backward force Fb based on the comparison result of the comparison unit 304. Specifically, when the comparison result by the comparison unit 304 is "wear amount per day is larger than wear amount standard value", the rotating shaft backward force setting unit 305 determines that abnormal wear has occurred and sets the magnitude of the rotating shaft backward force to be increased (raising setting) (S207). On the other hand, when the comparison result by the comparison unit 304 is not "wear amount per day is larger than wear amount standard value" but "wear amount per day is equal to wear amount standard value" (S208), the rotating shaft backward force setting unit 305 determines that abnormal wear has not occurred and sets the magnitude of the rotating shaft backward force to maintain status quo (S209). Furthermore, when the comparison result by the comparison unit 304 is neither "wear amount per day is larger than wear amount standard value" nor "wear amount per day is equal to wear amount standard value", that is, "wear amount per day is smaller than wear amount standard value" (S208), the rotating shaft backward force setting unit 305 determines that there is a possibility of cutting failure and sets the magnitude of the rotating shaft backward force to be reduced (S210). Note that the setting information is stored in the data storage unit 306.

Then, the rotating shaft backward force control unit 73 controls the rotating shaft backward force Fb based on the setting information stored in the data storage unit 306 (S211). For example, when the setting information is the raising setting, the rotating shaft backward force control unit 73 performs control to increase the rotating shaft backward force Fb. On the other hand, when the setting information is the status quo setting, the rotating shaft backward force control unit 73 performs control to maintain the rotating shaft backward force Fb in status quo. Further, when the setting information is the lowering setting, the rotating shaft backward force control unit 73 performs control to reduce the rotating shaft backward force Fb.

Thereafter, when the resin cutting operation of the resin cutting apparatus 2 is to be ended (S212), the control unit 70 performs control to end the resin cutting operation of the resin cutting apparatus 2. On the other hand, when the resin cutting operation of the resin cutting apparatus 2 is to be continued, the flow returns to S202 and the same operation is repeated.

As described above, according to the second control operation example, the amount of wear is judged in 24 hours, and the rotating shaft backward force Fb can be automatically adjusted so as to have an appropriate wear amount.

### <<Features in Embodiment>>

Next, the features in the embodiment will be described.

The first feature of the embodiment is that the resin cutting apparatus is provided with the wear amount detection position sensor in addition to the forward/backward movement control position sensor. This makes it possible to detect the amount of wear on the cutter blade with high accuracy from the position information of the cutter head (position information of the rotating shaft) based on the output from the wear amount detection position sensor.

Here, the technical significance of providing a separate wear amount detection position sensor in addition to the forward/backward movement control position sensor will be described. For example, it is conceivable that the amount of wear on the cutter blade is detected from the position information of the cutter head based on the output from the forward/backward movement control position sensor.

However, since the forward/backward movement control position sensor is a position sensor used to control the forward and backward movement of the rotating shaft, it has the advantage of having a wide position detection range, but it also has the disadvantage that the position detection accuracy thereof is insufficient for detecting the wear amount. For example, the position detection range of the forward/backward movement control position sensor is ±8 mm from the reference position, and the position detection accuracy of the forward/backward movement control position sensor is approximately 0.1 mm.

In this regard, a position detection accuracy of at least about 0.01 mm is required for the detection of the amount of wear on the cutter blade. Therefore, if a forward/backward movement control position sensor with a position detection accuracy of about 0.01 mm exists, it would be possible to detect the amount of wear on the cutter blade by using this forward/backward movement control position sensor, but such a position sensor does not exist in reality. For this reason, in the embodiment, the wear amount detection position sensor is provided in addition to the forward/backward movement control position sensor. The position detection range of this wear amount detection position sensor is a forward range of 3 mm and a backward range of 1 mm, but the wear amount detection position sensor has a high resolution with a position detection accuracy of about 0.01 **mm.** For this reason, in the embodiment, in order to detect the amount of wear on the cutter blade with high accuracy, the wear amount detection position sensor is provided in addition to the forward/backward movement control position sensor.

Next, the second feature of the embodiment is that the rotating shaft backward force is automatically controlled by appropriately setting the magnitude of the rotating shaft backward force applied to the rotating shaft based on the amount of wear calculated from the output of the wear amount detection position sensor. In this way, according to the second feature, the magnitude of the rotating shaft backward force can be adjusted to an appropriate value regardless of the skill of the worker. Namely, according to the second feature, the cutter blade pressing force can be automatically controlled to be constant, so that the occurrence of abnormal wear of the cutter blade and troubles due to cutting failure can be suppressed. Therefore, according to the second feature, in the pellet manufacturing method in which pellets are manufactured by cutting a resin, it is possible to suppress the shortening in the lifetime of the cutter blade and the degradation in the quality of the manufactured pellets.

Specifically, for example, the second feature is that the rotating shaft backward force control unit 73 includes the input unit 300, the first position acquisition unit 301, the second position acquisition unit 302, the difference calculation unit 303, the comparison unit 304, the rotating shaft backward force setting unit 305, and the data storage unit 306 as illustrated in FIG. 9. This makes it possible to automatically adjust the magnitude of the rotating shaft backward force based on the output of the wear amount detection position sensor. In other words, by combining the first and second features, automatic control of the rotating shaft backward force becomes possible.

### <Applied Example>

In the embodiment described above, the wear amount detection position sensor which has higher position detection accuracy than the forward/backward movement control position sensor is provided in the resin cutting apparatus in addition to the forward/backward movement control position sensor. Therefore, an applied example using the wear amount detection position sensor having high position detection accuracy will be described below.

The resin cutting apparatus is, for example, an apparatus that manufactures pellets by cutting a resin by rotating a plurality of cutter blades in water while always pressing the plurality of cutter blades at a predetermined pressure to a surface of a die from which a strand-shaped molten resin is discharged.

Here, when the operation of the resin cutting apparatus is continuously performed, the cutter blade wears out. For this reason, the cutter blade needs to be replaced periodically. When the cutter blade is replaced, a grinding process, in which the cutter blade is ground by rotating the cutter blade while pressing it to the surface of the die with an appropriate force, is performed prior to the operation of the resin cutting apparatus. This grinding process is performed while a worker checks the amount of wear on the cutter blade based on the output signal from the forward/backward movement control position sensor provided in the resin cutting apparatus. Specifically, in the grinding process, a worker manually adjusts operating parameters such as the cutter blade pressing force for pressing the cutter blade to the surface of the die and the grinding time while monitoring the state of the apparatus.

In the forward/backward movement control position sensor used currently, output signals often fluctuate due to noise, vibrations of the apparatus, and other factors, resulting in low position detection accuracy. Therefore, it is difficult for workers to determine whether the grinding process is being performed properly.

As described above, the current grinding process is performed based on the manual adjustment by a worker, and thus there is room for improvement in that the quality of the grinding process depends on the skill of the worker who can judge the sound when the cutter blade touches the die and the overall ground degree of the cutter blade and the position detection accuracy of the forward/backward movement control position sensor.

In this regard, the wear amount detection position sensor which has higher position detection accuracy than the forward/backward movement control position sensor is provided in the resin cutting apparatus in the embodiment described above in addition to the forward/backward movement control position sensor. Therefore, since the amount of wear on the cutter blade is detected with high accuracy by using the wear amount detection position sensor having high position detection accuracy and the end of the grinding process is automatically determined based on the detected amount of wear, it is believed that it is possible to realize a resin cutting apparatus that can appropriately grind the cutter blade regardless of the skill and experience of the worker. In the applied example, a resin cutting apparatus (including a pelletizer including the resin cutting apparatus) that realizes the automation of the grinding process using the wear amount detection position sensor will be described.

### <<Functional Block Configuration of Control Unit>>

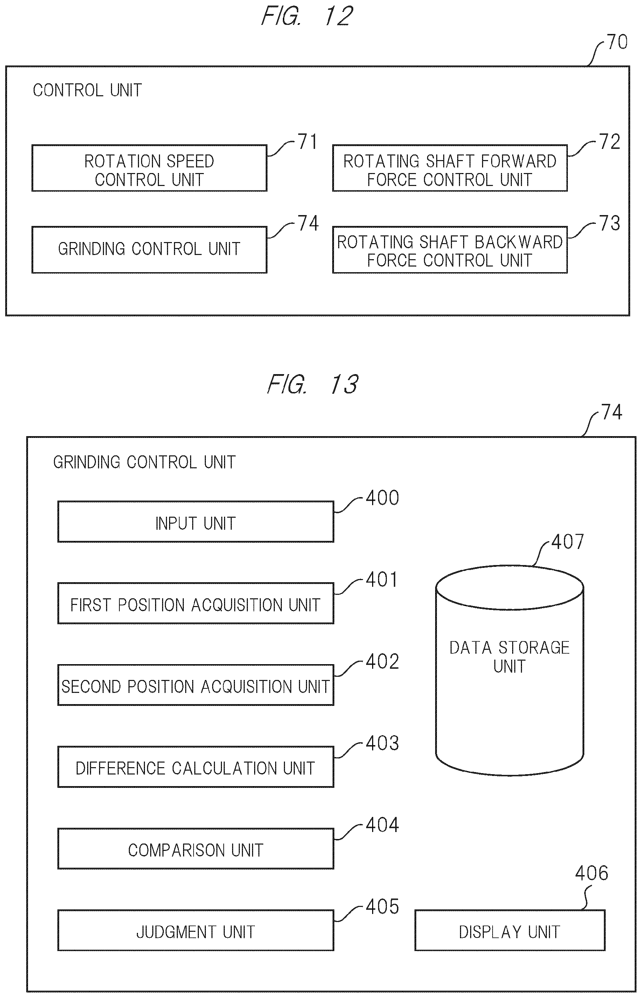

FIG. 12 is a functional block diagram of the control unit 70. As illustrated in FIG. 12, the control unit 70 is configured to control the cutter blade pressing force for pressing the plurality of cutter blades to the die 50 as in the embodiment, and includes the rotation speed control unit 71, the rotating shaft forward force control unit 72, and the rotating shaft backward force control unit 73. Further, in the applied example, the control unit 70 includes a grinding control unit 74 configured to control the grinding process performed on each of the plurality of cutter blades before performing the operation of cutting the resin into pellets.

FIG. 13 is a functional block diagram of the grinding control unit 74.

In FIG. 13, the grinding control unit 74 includes an input unit 400, a first position acquisition unit 401, a second position acquisition unit 402, a difference calculation unit 403, a comparison unit 404, a judgment unit 405, a display unit 406, and a data storage unit 407.

The input unit 400 is configured to receive output data (output signal) from the wear amount detection position sensor 200A. Also, the input unit 400 is configured to receive a preset wear amount setting value. Further, the output data from the wear amount detection position sensor 200A input to the input unit 400 and the preset grinding amount setting value are stored in the data storage unit 407. Namely, the data storage unit 407 has a function of storing various data.

The first position acquisition unit 401 is configured to acquire a "first position" of the cutter head in which a plurality of cutter blades are arranged, based on the output data from the wear amount detection position sensor 200A stored in the data storage unit 407. Here, the "first position" refers to the position at which the cutter head is disposed when the cutter head is brought into contact with the surface of the die. Then, the data regarding the "first position" is stored in the data storage unit 407.

The second position acquisition unit 402 is configured to acquire a "second position" of the cutter head in which a plurality of cutter blades are arranged, based on the output data from the wear amount detection position sensor 200A stored in the data storage unit 407. Here, the "second position" refers to the position at which the cutter head is disposed after the grinding process has been performed for a predetermined period of time. The data regarding the "second position" is stored in the data storage unit 407.

The difference calculation unit 403 is configured to calculate the difference between the "first position" and the "second position" based on the "first position" and the "second position" stored in the data storage unit 407. The difference between the "first position" and the "second position" corresponds to the ground amount the cutter blade. In other words, the difference calculation unit 403 calculates the ground amount of the cutter blade by calculating the difference between the "first position" and the "second position". The data regarding the difference between the "first position" and the "second position" corresponding to the ground amount is stored in the data storage unit 407.

The comparison unit 404 is configured to compare, for example, the difference between the "first position" and the "second position" stored in the data storage unit 407 with the grinding amount setting value stored in the data storage unit 407. In other words, the comparison unit 404 is configured to compare the ground amount after the grinding process has been performed for a predetermined period of time with the grinding amount setting value, and determine whether the ground amount after the grinding process has been performed for a predetermined period of time is larger than or smaller than the grinding amount setting value. Then, the comparison result from the comparison unit 404 is stored in the data storage unit 407.

The judgment unit 405 is configured to judge whether or not to end the grinding process based on the comparison result of the comparison unit 404. For example, when the comparison result by the comparison unit 404 is "the ground amount after the grinding process is performed for a predetermined period of time is equal to or larger than the grinding amount setting value", it means that the grinding process has been performed sufficiently. In this case, the judgment unit 405 performs a process to control the display unit 406 to display that the grinding process has been completed. This causes the display unit 406 to display a message indicating that the grinding process has been completed, and the worker who sees this message presses the stop button to stop the motor, whereby the grinding process is ended. On the other hand, when the comparison result by the comparison unit 404 is "the ground amount after the grinding process is performed for a predetermined period of time is smaller than the grinding amount setting value", the judgment unit 405 judges that the grinding process is insufficient and continues the grinding process. Further, the judgment unit 405 is configured to manage the grinding time using a timer, and for example, even when the grinding process is insufficient, it performs a process to display a message indicating that the grinding process will be forcibly ended if a predetermined setting time has elapsed.

The grinding control unit 74 is configured as described above.

### <<Control Operation (Control Method) of Grinding Process>>

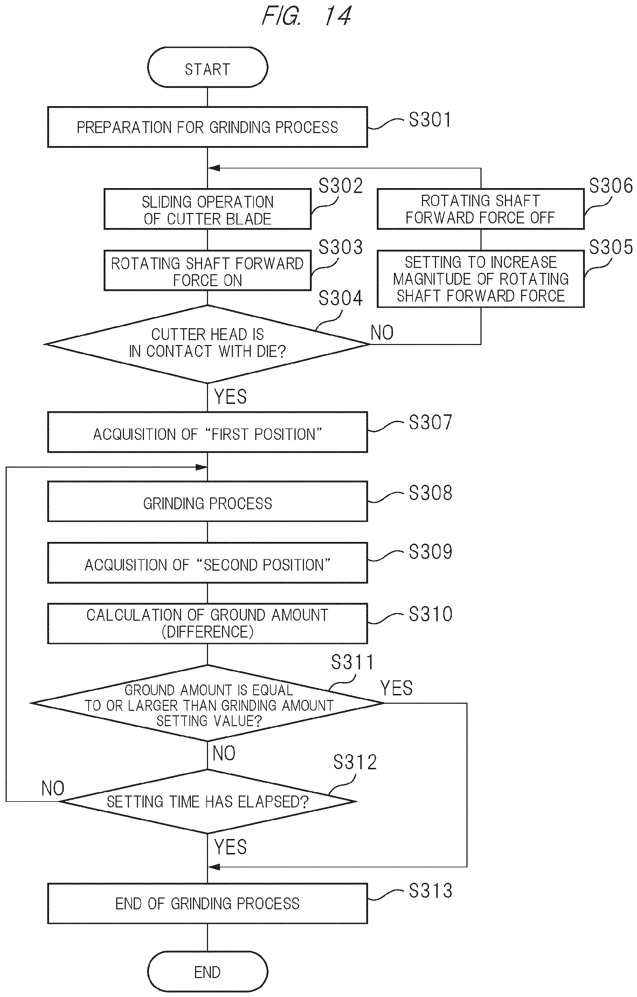

FIG. 14 is a flowchart illustrating the flow of the control operation of the grinding process.

In FIG. 14, first, a preset grinding amount setting value is stored in the data storage unit 407 as a premise. Also, a predetermined setting time is stored in the data storage unit 407.

Then, before performing the operation of cutting the resin into pellets, the grinding control unit 74 prepares for the grinding process on each of the plurality of cutter blades (S301). Specifically, for example, the motor is started.

Next, the grinding control unit 74 performs the sliding operation of the cutter blade (running-in operation of the rotating shaft) (S302). Then, the control unit 70 applies the rotating shaft forward force Ff to the rotating shaft 52 based on the output from the forward/backward movement control position sensor 200B used to control the forward and backward movement of the rotating shaft 52 attached to the cutter head 51 in which the plurality of cutter blades are arranged (S303). Note that, when the cutter head 51 is not in contact with the die 50 (S304), the magnitude of the rotating shaft forward force Ff is set to be increased (S305) and the application of the rotating shaft forward force Ff to the rotating shaft 52 is stopped (S306), and then the flow returns to S302.

When the cutter head 51 reaches the nearby region where it comes into contact with the die 50, the control unit 70 switches from the output of the forward/backward movement control position sensor 200B to the output of the wear amount detection position sensor 200A, and performs control to apply the rotating shaft forward force Ff to the rotating shaft 52 based on the output from the wear amount detection position sensor 200A. At this time, after the output from the wear amount detection position sensor 200A is input to the input unit 400 of the grinding control unit 74, the output data (output signal) of the wear amount detection position sensor 200A input to the input unit 400 is stored in the data storage unit 407.

Next, when the cutter head 51 comes into contact with the die 50 (S304), the first position acquisition unit 401 acquires the "first position" of the cutter head 51 based on the output data of the wear amount detection position sensor 200A stored in the data storage unit 407 (S307). The acquired "first position" of the cutter head 51 is stored in the data storage unit 407.

Thereafter, the grinding process is performed in the resin cutting apparatus 2 (S308). In this way, the plurality of cutter blades arranged in the cutter head 51 are ground. Then, after the output from the wear amount detection position sensor 200A is input to the input unit 400 of the grinding control unit 74, the output data of the wear amount detection position sensor 200A input to the input unit 400 is stored in the data storage unit 407. Then, the second position acquisition unit 402 acquires the "second position" of the cutter head 51 based on the output data of the wear amount detection position sensor 200A stored in the data storage unit 407 (S309). The acquired "second position" of the cutter head 51 is stored in the data storage unit 407.

Next, the difference calculation unit 403 receives the "first position" and the "second position" stored in the data storage unit 407, and then calculates the difference between the "first position" and the "second position" (S310). This difference corresponds to the ground amount of the cutter blade in the grinding process. The difference between the "first position" and the "second position" corresponding to the ground amount is stored in the data storage unit 407.

Next, the comparison unit 404 receives the actual ground amount and the grinding amount setting value stored in the data storage unit 407, and then compares the actual ground amount with the grinding amount setting value (S311). Then, the judgment unit 405 judges whether or not to end the grinding process based on the comparison result of the comparison unit 404 (S311). Specifically, when the comparison result by the comparison unit 404 is "ground amount is equal to or larger than grinding amount setting value", the judgment unit 405 judges that the grinding process has been performed sufficiently, and ends the grinding process (S313). On the other hand, when the comparison result by the comparison unit 404 is "ground amount is smaller than grinding amount setting value", the judgment unit 405 judges whether a predetermined setting time has elapsed (S312). Then, when the judgment unit 405 judges that the setting time has elapsed, it forcibly ends the grinding process even when the comparison result by the comparison unit 404 is "ground amount is smaller than grinding amount setting value". On the other hand, when the judgment unit 405 judges that the setting time has not elapsed, the grinding control unit 74 determines that the ground amount of the cutter blade is insufficient, and the flow returns to S308 to continue the grinding process. As described above, according to the control operation of the grinding process, the grinding process can be automated by using the wear amount detection position sensor 200A which has higher position detection accuracy than the forward/backward movement control position sensor 200B.

### <<Effects in Applied Example>>

The resin cutting apparatus in the applied example is provided with not only the forward/backward movement control position sensor, but also the wear amount detection position sensor which has higher position detection accuracy than the forward/backward movement control position sensor. In addition, the resin cutting apparatus in the applied example is provided with the grinding control unit configured to determine the appropriate end time for the grinding process based on the output from the wear amount detection position sensor. Therefore, according to the applied example, the accurate ground amount of the cutter blade can be calculated based on the output from the wear amount detection position sensor having high position detection accuracy, and the grinding control unit can automatically determine the appropriate timing to end the grinding process based on the calculated accurate ground amount. As a result, according to the applied example, it is possible to perform the grinding process on the cutter blade with the appropriate ground amount regardless of the skill and experience of the worker.

Furthermore, according to the applied example, the following effects can be obtained.
(1) Since not only the grinding process but also the preparation process for the grinding process can be automated, the labor-saving in the preparation process can be achieved.
(2) Since the grinding process is automated, the grinding work can be easily performed by even the recipient (customer) of the resin cutting apparatus (pelletizer) alone.
(3) Since the automated grinding process can provide appropriate grinding of the cutter blade, it is possible to extend the service life of the cutter blade.
(4) Since the grinding process is properly automated, the quality of the pellets manufactured by the resin cutting apparatus can be improved.
(5) Since the grinding process is automated, the labor required for the grinding work can be reduced and the occurrence of troubles during the grinding work can be reduced.

In the foregoing, the invention made by the inventors has been specifically described based on the embodiment thereof. However, it goes without saying that the present invention is not limited to the above embodiment, and various modifications can be made within the range not departing from the gist thereof.

### REFERENCE SIGNS LIST

- 1: extruder
- 2: resin cutting apparatus
- 3: slurry
- 4: pipe
- 5: pump
- 6: dehydrator
- 7: tank
- 8: centrifugal dehydration dryer
- 9: vibrating sieve
- 30: pellet
- 50: die
- 50a: nozzle
- 51: cutter head
- 51a: cutter blade
- 52: rotating shaft
- 53: motor
- 54: sleeve
- 55: housing
- 60: flow path chamber
- 60a: inlet
- 60b: outlet
- 70: control unit
- 71: rotation speed control unit
- 72: rotating shaft forward force control unit
- 73: rotating shaft backward force control unit
- 74: grinding control unit
- 80: rotating shaft forward force generating unit
- 90: rotating shaft backward force generating unit
- 100: pelletization system
- 200A: wear amount detection position sensor
- 200B: forward/backward movement control position sensor
- 201: detection plate
- 300: input unit
- 301: first position acquisition unit
- 302: second position acquisition unit
- 303: difference calculation unit
- 304: comparison unit
- 305: rotating shaft backward force setting unit
- 306: data storage unit
- 400: input unit
- 401: first position acquisition unit
- 402: second position acquisition unit
- 403: difference calculation unit
- 404: comparison unit
- 405: judgment unit
- 406: display unit
- 407: data storage unit

## Claims

1. A method of controlling a resin cutting apparatus configured to manufacture pellets by cutting a resin discharged from an extruder by a plurality of cutter blades, the method comprising a step of controlling a cutter blade pressing force for pressing the plurality of cutter blades to a die provided on a resin discharge side of the extruder,
wherein the step of controlling the cutter blade pressing force includes:
a wear amount detecting step of detecting a wear amount of the plurality of cutter blades during an operation of the resin cutting apparatus to cut the resin into the pellets; and
a rotating shaft backward force controlling step of controlling a magnitude of a rotating shaft backward force applied to a rotating shaft attached to a cutter head in which the plurality of cutter blades are arranged, based on the wear amount of the plurality of cutter blades detected in the wear amount detecting step.

2. The method of controlling the resin cutting apparatus according to claim 1,
wherein the wear amount detecting step detects the wear amount of the plurality of cutter blades based on an output from a wear amount detection position sensor.

3. The method of controlling the resin cutting apparatus according to claim **2,**
wherein the resin cutting apparatus is provided with a forward/backward movement control position sensor used to control forward and backward movement of the rotating shaft.

4. The method of controlling the resin cutting apparatus according to claim 3,
wherein the wear amount detection position sensor has higher position detection accuracy than the forward/backward movement control position sensor.

5. The method of controlling the resin cutting apparatus according to claim 4,
wherein the step of controlling the cutter blade pressing force includes:
(a) a step of bringing the plurality of cutter blades into contact with the die based on an output from the forward/backward movement control position sensor and the output from the wear amount detection position sensor;
(b) after the step (a), a step of acquiring a first position of the cutter head based on the output from the wear amount detection position sensor;
(c) after the step (b), a step of performing the operation of the resin cutting apparatus to cut the resin into the pellets for a predetermined period of time;
(d) after the step (c), a step of acquiring a second position of the cutter head based on the output from the wear amount detection position sensor;
(e) after the step (d), a step of calculating a difference between the first position and the second position;
(f) after the step (e), a step of comparing the difference and a predetermined setting value; and
(g) after the step (f), a step of controlling the magnitude of the rotating shaft backward force applied to the rotating shaft based on a comparison result between the difference and the setting value.

6. The method of controlling the resin cutting apparatus according to claim 5,
wherein, in the step (g), when the difference is larger than the setting value, the magnitude of the rotating shaft backward force applied to the rotating shaft is controlled to be increased.

7. The method of controlling the resin cutting apparatus according to claim 5,
wherein, in the step (g), when the difference is smaller than the setting value, the magnitude of the rotating shaft backward force applied to the rotating shaft is controlled to be reduced.

8. A method of controlling a resin cutting apparatus configured to manufacture pellets by cutting a resin discharged from an extruder by a plurality of cutter blades, the method comprising a step of performing a grinding process on each of the plurality of cutter blades before performing an operation to cut the resin into the pellets,
wherein the step of performing the grinding process includes:
(a) a step of bringing the plurality of cutter blades into contact with a die provided on a resin discharge side of the extruder based on an output from a forward/backward movement control position sensor used to control forward and backward movement of a rotating shaft attached to a cutter head in which the plurality of cutter blades are arranged and an output from a wear amount detection position sensor;
(b) after the step (a), a step of acquiring a first position of the cutter head based on the output from the wear amount detection position sensor;
(c) after the step (b), a step of performing the grinding process for a predetermined period of time;
(d) after the step (c), a step of acquiring a second position of the cutter head based on the output from the wear amount detection position sensor;
(e) after the step (d), a step of calculating a difference between the first position and the second position; and
(f) after the step (e), a step of comparing the difference and a predetermined setting value to judge whether or not to end the grinding process.

9. The method of controlling the resin cutting apparatus according to claim 8,
wherein the wear amount detection position sensor has higher position detection accuracy than the forward/backward movement control position sensor.

10. The method of controlling the resin cutting apparatus according to claim 8,
wherein, in the step (f), even when it is judged to continue the grinding process, the grinding process is forcibly ended if a predetermined setting time has elapsed.

11. A resin cutting apparatus comprising:
a die provided on a resin discharge side of an extruder;
a plurality of nozzles provided in the die;
a plurality of cutter blades configured to cut a resin discharged from the plurality of nozzles into pellets;
a cutter head in which the plurality of cutter blades are arranged;
a rotating shaft attached to the cutter head;
a motor configured to rotate the rotating shaft;
a flow path chamber constituting a flow path space that is in contact with the cutter head;
an inlet through which a fluid flows into the flow path chamber;
an outlet through which the fluid and the pellets flow out of the flow path chamber;
a control unit configured to control a cutter blade pressing force for pressing the plurality of cutter blades to the die;
a rotating shaft forward force generating unit configured to generate a rotating shaft forward force on the rotating shaft;
a rotating shaft backward force generating unit configured to generate a rotating shaft backward force on the rotating shaft;
a forward/backward movement control position sensor configured to control forward and backward movement of the rotating shaft; and
a wear amount detection position sensor configured to detect a wear amount of the plurality of cutter blades,
wherein the control unit controls a magnitude of the rotating shaft backward force applied to the rotating shaft based on an output from the wear amount detection position sensor.

12. The resin cutting apparatus according to claim 11,
wherein the wear amount detection position sensor has higher position detection accuracy than the forward/backward movement control position sensor.

13. The resin cutting apparatus according to claim 11,
wherein the control unit includes:
a first position acquisition unit configured to acquire a first position of the cutter head based on the output from the wear amount detection position sensor;
a second position acquisition unit configured to acquire a second position of the cutter head after performing an operation of the resin cutting apparatus for a predetermined period of time, based on the output from the wear amount detection position sensor;
a difference calculation unit configured to calculate a difference between the first position and the second position;
a comparison unit configured to compare the difference and a predetermined setting value; and
a rotating shaft backward force setting unit configured to set the magnitude of the rotating shaft backward force based on a comparison result between the difference and the setting value, and
wherein the control unit controls the rotating shaft backward force applied to the rotating shaft based on the magnitude of the rotating shaft backward force set by the rotating shaft backward force setting unit.

14. A resin cutting apparatus comprising:
a die provided on a resin discharge side of an extruder;
a plurality of nozzles provided in the die;
a plurality of cutter blades configured to cut a resin discharged from the plurality of nozzles into pellets;
a cutter head in which the plurality of cutter blades are arranged;
a rotating shaft attached to the cutter head;
a motor configured to rotate the rotating shaft;
a flow path chamber constituting a flow path space that is in contact with the cutter head;
an inlet through which a fluid flows into the flow path chamber;
an outlet through which the fluid and the pellets flow out of the flow path chamber;
a control unit configured to control a cutter blade pressing force for pressing the plurality of cutter blades to the die;
a rotating shaft forward force generating unit configured to generate a rotating shaft forward force on the rotating shaft;
a rotating shaft backward force generating unit configured to generate a rotating shaft backward force on the rotating shaft;
a forward/backward movement control position sensor configured to control forward and backward movement of the rotating shaft; and
a wear amount detection position sensor configured to detect a wear amount of the plurality of cutter blades,
wherein the control unit includes a grinding control unit configured to control a grinding process performed on each of the plurality of cutter blades before performing an operation of cutting the resin into the pellets, and
wherein the grinding control unit includes:
a first position acquisition unit configured to acquire a first position of the cutter head based on an output from the wear amount detection position sensor;
a second position acquisition unit configured to acquire a second position of the cutter head after performing the grinding process for a predetermined period of time, based on the output from the wear amount detection position sensor;
a difference calculation unit configured to calculate a difference between the first position and the second position;
a comparison unit configured to compare the difference and a predetermined setting value; and
a judgment unit configured to judge whether to end the grinding process based on a comparison result between the difference and the setting value.

15. The resin cutting apparatus according to claim 14,
wherein the wear amount detection position sensor has higher position detection accuracy than the forward/backward movement control position sensor.

16. A pelletizer comprising:
an extruder; and
a resin cutting apparatus configured to cut a resin extruded from the extruder into pellets,
wherein the resin cutting apparatus includes:
a die provided on a resin discharge side of the extruder;
a plurality of nozzles provided in the die;
a plurality of cutter blades configured to cut the resin discharged from the plurality of nozzles into the pellets;
a cutter head in which the plurality of cutter blades are arranged;
a rotating shaft attached to the cutter head;
a motor configured to rotate the rotating shaft;
a flow path chamber constituting a flow path space that is in contact with the cutter head;
an inlet through which a fluid flows into the flow path chamber;
an outlet through which the fluid and the pellets flow out of the flow path chamber;
a control unit configured to control a cutter blade pressing force for pressing the plurality of cutter blades to the die;
a rotating shaft forward force generating unit configured to generate a rotating shaft forward force on the rotating shaft;
a rotating shaft backward force generating unit configured to generate a rotating shaft backward force on the rotating shaft;
a forward/backward movement control position sensor configured to control forward and backward movement of the rotating shaft; and
a wear amount detection position sensor configured to detect a wear amount of the plurality of cutter blades, and
wherein the control unit controls a magnitude of the rotating shaft backward force applied to the rotating shaft based on an output from the wear amount detection position sensor.

17. The pelletizer according to claim 16,
wherein the wear amount detection position sensor has higher position detection accuracy than the forward/backward movement control position sensor.

18. The pelletizer according to claim 11,
wherein the control unit includes:
a first position acquisition unit configured to acquire a first position of the cutter head based on the output from the wear amount detection position sensor;
a second position acquisition unit configured to acquire a second position of the cutter head after performing an operation of the resin cutting apparatus for a predetermined period of time, based on the output from the wear amount detection position sensor;
a difference calculation unit configured to calculate a difference between the first position and the second position;
a comparison unit configured to compare the difference and a predetermined setting value; and
a rotating shaft backward force setting unit configured to set the magnitude of the rotating shaft backward force based on a comparison result between the difference and the setting value, and
wherein the control unit controls the rotating shaft backward force applied to the rotating shaft based on the magnitude of the rotating shaft backward force set by the rotating shaft backward force setting unit.

19. A pelletizer comprising:
an extruder; and
a resin cutting apparatus configured to cut a resin extruded from the extruder into pellets,
wherein the resin cutting apparatus includes:
a die provided on a resin discharge side of the extruder;
a plurality of nozzles provided in the die;
a plurality of cutter blades configured to cut the resin discharged from the plurality of nozzles into the pellets;
a cutter head in which the plurality of cutter blades are arranged;
a rotating shaft attached to the cutter head;
a motor configured to rotate the rotating shaft;
a flow path chamber constituting a flow path space that is in contact with the cutter head;
an inlet through which a fluid flows into the flow path chamber;
an outlet through which the fluid and the pellets flow out of the flow path chamber;
a control unit configured to control a cutter blade pressing force for pressing the plurality of cutter blades to the die;
a rotating shaft forward force generating unit configured to generate a rotating shaft forward force on the rotating shaft;
a rotating shaft backward force generating unit configured to generate a rotating shaft backward force on the rotating shaft;
a forward/backward movement control position sensor configured to control forward and backward movement of the rotating shaft; and
a wear amount detection position sensor configured to detect a wear amount of the plurality of cutter blades,
wherein the control unit includes a grinding control unit configured to control a grinding process performed on each of the plurality of cutter blades before performing an operation of cutting the resin into the pellets, and
wherein the grinding control unit includes:
a first position acquisition unit configured to acquire a first position of the cutter head based on an output from the wear amount detection position sensor;
a second position acquisition unit configured to acquire a second position of the cutter head after performing the grinding process for a predetermined period of time, based on the output from the wear amount detection position sensor;
a difference calculation unit configured to calculate a difference between the first position and the second position;
a comparison unit configured to compare the difference and a predetermined setting value; and
a judgment unit configured to judge whether to end the grinding process based on a comparison result between the difference and the setting value.

20. The pelletizer according to claim 19,
wherein the wear amount detection position sensor has higher position detection accuracy than the forward/backward movement control position sensor.
